Europäisches Patentamt

European Patent Office

Office européen des brevets

(11) Publication number: **0 302 531**
**A1**

## EUROPEAN PATENT APPLICATION

(21) Application number: **88112901.9**

(22) Date of filing: **08.08.88**

(51) Int. Cl.⁴ **C23F 11/14 , C02F 1/20**

(30) Priority: **07.08.87 US 82877**

(43) Date of publication of application:
**08.02.89 Bulletin 89/06**

(84) Designated Contracting States:
**AT DE ES GB IT**

(71) Applicant: **NALCO CHEMICAL COMPANY**
**One Nalco Center**
**Naperville Illinois 60566-1024(US)**

(72) Inventor: **Cosper, David R.**
**6824 Valley View Drive**
**Downers Grove Illinois 60516(US)**

(74) Representative: **Rotter, Ulrich, Dipl.-Chem. Dr.**
**et al**
**Patentanwälte Dipl.-Ing. Olaf Ruschke**
**Dipl.-Ing. Hans E. Ruschke Dipl.-Ing. Jürgen**
**Rost Dipl.-Chem. Dr. U. Rotter**
**Pienzenauerstrasse 2**
**D-8000 München 80(DE)**

(54) **Use of morpholino-enamine compounds such as morpholinohexose reductone as an oxygen scavenger.**

㊲ An improved method for scavenging dissolved oxygen from industrial waters which comprises treating said waters with at least 1 ppb of a morpholino compound having an enamine grouping. Preferred scavenger compound is shown in Fig . 1.

Fig. 1

EP 0 302 531 A1

# Use of Morpholino-Enamine Compounds such as Morpholinohexose Reductone as an Oxygen Scavenger

## Introduction

Dissolved oxygen in water is undesirable when such waters are used in industrial applications. Oxygen containing waters cause corrosion in such industrial equipment as boilers, heat exachangers, and oil well equipment.

A common method of combating this problem is to scavenge oxygen with chemicals. The invention deals with an improved chemical for scavenging oxygen that is efficient and is organic and readily available.

## The Invention

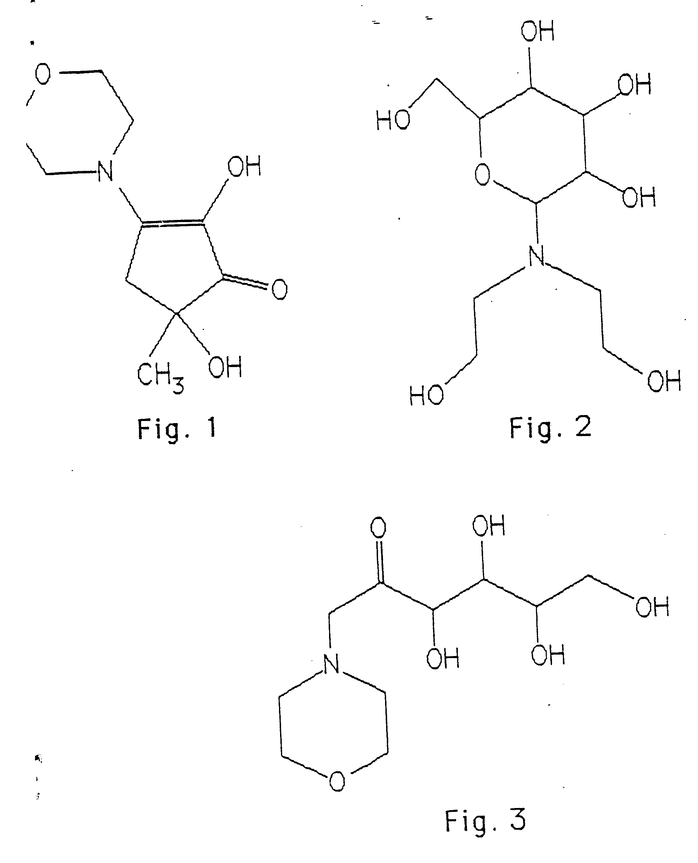

In accordance with the invention, it has been found that oxygen may be scavenged from industrial waters by using from about between 1 to 1,000 ppb by weight in the water of a morpholino enamine compound such as a morpholinohexose reductone, or a 3-(morpholino-4)- substituted cyclopenten-1-one or cyclohexen-1-one such as 2,5-dihydroxy-5-methyl-3-(4-morpholinyl)-2-cyclopenten-1-one, which is illustrated as Fig. 1. A Typical reductone can be obtained by a reaction as explained by J.E. Hodge, B.E. Fisher and E.C. Nelson in the article "Dicarbonyls, Reductones, and Heterocyclics Produced by Reactions of Reducing Sugars with Secondary Amine Salts", Proceedings of the American Society of Brewing Chemists, p. 84 - 92, 1963. A general route of preparation is reacting morpholine with a sugar compound such as glucose, fructose, sorbose, mannose or sucrose (saccharose), preferably under reflux conditions in a solvent such as ethanol. After cooling, the morpholino compound will precipitate as a solid and can be recrystallized.

A preferred dosage is 20-500 ppb in a typical industrial water system or about 2 parts to 50 parts of morpholinohexose reductone or of the substituted cycloolefine per part of oxygen by weight.

## Test Method

Initial kinetic studies of scavengers with dissolved oxygen were carried out at $32°C + 0.1°$ in air-saturated 0.025M NaHCO$_3$ containing about $2.5 \times 10^{-4}$M oxygen. These reactions were carried out in a 500-ml round bottom flask equipped with a pH electrode, an Orion Model 97-08 oxygen electrode, thermometer and a septum-covered port for injection for scavenger and catalyst solutions and immersed in a thermostated water bath. The reaction was stirred continuously with a 1-inch (2.54 cm) Teflon$^R$-coated magnetic bar. After injection of scavenger and catalyst, the disappearance of oxygen was followed with the Orion electrode signal.

High-temperature measurements of effectiveness were carried our by passing a dilute, aerated solution of scavenger at 40 ml/min through a 20 ft. (6,096 cm) by 1/4 inch (0,635 cm) copper coil heated to 190°F (88°C). Concentrations of oxygen are measured before and after the coil with Orion Model 97-08 electrodes.

## Evaluation of the Invention

Using the above test method, the results using morpholinohexose reductone in comparison with other known or proposed oxygen scavengers is presented below in Table I and Table II. The comparison with isoascorbic acid, a well-known industrial scavenger, is particularly illustrated in demonstrating the efficacy of the invention. Two additional condensation products of hexose and amines are illustrated in Figs. 2 and 3 and are included in Table I. Neither materiaal reacts with dissolved oxygen at a detectable rate.

TABLE I

| Oxygen Scavenging Tests at 32° C±0.1° | | | | |
|---|---|---|---|---|
| Examples of Typical Results[*a] | | | | |
| Scavenger | Conc. $Mx10^4$ | $[Cu(II)] \times 10^{4}$[*b] | pH | Initial Rate $M/sx10^7$[*c] |
| Morpholinohexose reductone | 5.5 | 0 | 9.6 | 2.2 |
| " | 5.5 | 0.16 | 9.6 | 40.5 |
| Diethanolaminohexose | 5.7 | 0 | 9.4 | 0 |
| morpholinohexose | 5.6 | 0.16 | 9.4 | 0 |
| isoascorbic acid | 5.6 | 0 | 9.6 | 1.1 |
| dihydroxyacetone | 3.77 | 0.16 | 10.1 | 0.66 |
| " | 16.7 | 0 | 9.3 | 0 |
| " | 16.7 | 0.16 | 9.3 | 0.62 |
| fructose | 8.3 | 0 | 10.0 | 0.66 |
| " | 8.3 | 0.16 | 10.0 | 0.66 |
| hydroxylamine | 3.6 | 0.24 | 9.35 | 13.0 |
| " | 15.0 | 0 | 9.35 | 0.01 |
| aminoguanidine | 11.0 | 0 | 10.0 | 0.10 |
| " | 11.0 | 0.16 | 10.0 | 2.3 |

a) Kinetic runs in air-saturated 0.025M $NaHCO_3$ adjusted to pH with NaOH:

(b) as $CuSO_4$ (M);

(c) Initial rate = $-d[O_2]/dt$ at time = 0; as comparison 1 ppm/min = $5.2 \times 10^{-7}$ M/s.

## Table II

### High Temperature ($\sim 88^{o}C$) Testing of Various Oxygen Scavengers
### Oxygen reduced (as %) at various mole ratios of reactants ([scavenger]$_0$ : [$O_2$]$_0$ )[a,b]

| Scavengers | 1 | 1.5 | 2 | 2.5 | 4 | 5 | 8 | 10 |
|---|---|---|---|---|---|---|---|---|
| Morpholinohexose reductone (I) | 47% | -- | 79% | -- | 86% | -- | 88% | -- |
| Dihydroxyacetone | 0 | -- | -- | 15% | -- | 81% | -- | -- |
| Aminoquanidine (Acetate) | 42% | 35% | 54 % | -- | 46 % | -- | 58% | -- |

NOTES:  a) % reduction after 11 minutes of continuous steady flow
        b) Values calculated as

$$\% \text{ reduction} = \frac{[O_2]_0 - [O_2]_t}{[O_2]_0} \times 100\%$$

EP 0 302 531 A1

**Claims**

1. An improved method for scavenging dissolved oxygen from industial waters which comprises treating said waters with at least 1 ppb of a morpholino enamine compound such as a morpholinohexose reductone, or a 3-(morpholino-4)- substituted cyyclopenten-1-on or cyclohexen-1-on such as 2,5-dihydroxy-5-methyl-3-(4-morpholinyl)-2-cyclopenten-1-one,

2. Method of claim 1 where the morpholino compound is used at about 20 to 500 ppb.

3. Method of claim 1 or claim 2 where the scavenger is used at dosages of about 2 to 50 parts by weight per 1 part by weight of oxygen.

4. Method of anyone of claims 1 to 3 wherein the scavenger is 2,5-dihydroxy-5-methyl-3-(4-morpholinyl)-2-cyclopenten-1-one as shown in figure 1.

5. Method of anyone of claims 1 to 3 wherein the scavenger is a morpholinohexose reductone.

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 503 096  (PCI POLYCHEMIE GmbH)<br>* Claims 1,2; page 9, lines 5-10,20-26 * | 1-3 | C 23 F  11/14<br>C 02 F   1/20 |
| | --- | | |
| Y | US-A-3 019 196  (D.L. ANDERSEN)<br>* Claim 1; column 1, lines 11-17 * | 1-3 | |
| | --- | | |
| A | US-A-3 424 763  (J.C. MARTIN) | | |
| | --- | | |
| A | US-A-2 993 007  (D.L. ANDERSEN) | | |
| | --- | | |
| A | US-A-2 580 923  (A.J. JACOBY) | | |
| | ----- | | |

TECHNICAL FIELDS SEARCHED (Int. Cl.4)

C 23 F  11/00
C 02 F   1/00

The present search report has been drawn up for all claims

| Place of search | Date of completion of the search | Examiner |
|---|---|---|
| THE HAGUE | 15-11-1988 | TORFS F.M.G. |